# EUROPEAN PATENT APPLICATION

(11) **EP 2 962 558 A1**
(43) Date of publication of application: **06.01.2016**
(21) Application number: 15175145.0
(22) Date of filing: 02.07.2015
(51) Int. Cl.: A01M 1/14

(54) **INSECT TRAP**

(30) Priority: 03.07.2014 GB 201411876
(71) Applicant: Pelsis Limited, Grimbald Crag Close Knaresborough North Yorkshire HG5 8PJ (GB)
(72) Inventor: HOLMES, Thomas Michael, Knaresborough, North Yorkshire HG5 8PJ (GB)
(74) Representative: Appleyard Lees

(57) **Abstract**

An insect trap 10 comprises a body portion 12, to which is secured a grille 14, by a hinged attachment to allow the grille 14 to open downwards to allow access to the body portion 12. The insect trap 10 incorporates removable reflectors 22a and 22b located behind the UV fluorescent tube 16a/b. A body panel 24 of the body portion 12 comprises supports 26a-26d of usual construction for the UV fluorescent tubes 16a/b.

## Description

This invention relates to an insect trap, particularly, but not limited to, an insect trap incorporating insect-attracting lamps and \ an adhesive board for retaining insects attracted by the lamps.

Prior art insect traps often take the form of a housing in which are located insect-attracting lamps, close to which are located adhesive covered boards that will trap an insect when it makes contact with the board having been attracted by light from the lamp. Such adhesive boards are typically known as glueboards. Prior art insect traps also may also include electrified grilles which will immobilise or kill an insect that makes contact with the grille. The grille will often be placed in front of the lamps referred to above so that insects flying or moving towards the lamps make contact with the grille.

The lamps used are typically UV fluorescent tubes, which are attractive to flying insects. However, disadvantages arise with use of UV lamps in relation to the adhesive boards, because the UV degrades the effectiveness of the adhesive, by curing the adhesive.

It is an object to the present invention to address the above mentioned disadvantages.

According to the present invention there is provided an apparatus and method as set forth in the appended claims. Other features of the invention will be apparent from the dependent claims, and the description which follows.

According to an aspect of the present invention there is provided an insect trap incorporating at least one insect-attracting light, at least one reflector and at least one insect-immobilising section, wherein the at least one reflector is removable and is operable to be refitted to the insect trap.

A user can advantageously operate the insect trap with the at least one reflector either in position proximate the at least one insect-attracting light or with the at least one reflector removed.

The at least one reflector may be securable to a body section of the insect trap. The at least one reflector may be securable by means of tabs, which tabs may be at opposite ends of the at least one reflector. The tabs may be receivable in corresponding openings in the body section. The openings may be located between supports of the at least insect-attracting light.

The supports of the at least one insect-attracting light may provide power to the at least one insect-attracting light.

At least two insect-attracting lights may be provided. Each insect-attracting light may have an associated reflector. The reflector may be located on a body portion of the insect trap. The reflector may be interposed between the insect-attracting light and the at least one insect-immobilising section.

The at least one insect-immobilising section may be a glueboard. The at least one insect-immobilising section may be removable, preferably for replacement. The at least one insect-immobilising section may be removable after removal of the at least one reflector.

The at least one insect-immobilising section may be an electrified grille, which may be located inside the body of the insect trap, preferably to deter user contact.

The insect trap may include an electrified grille, which may be pivotally attached, preferably at a lower edge thereof, to the body of the insect trap.

For a better understanding of the invention, and to show how embodiments of the same may be carried into effect, reference will now be made, by way of example, to the accompanying diagrammatic drawings in which:

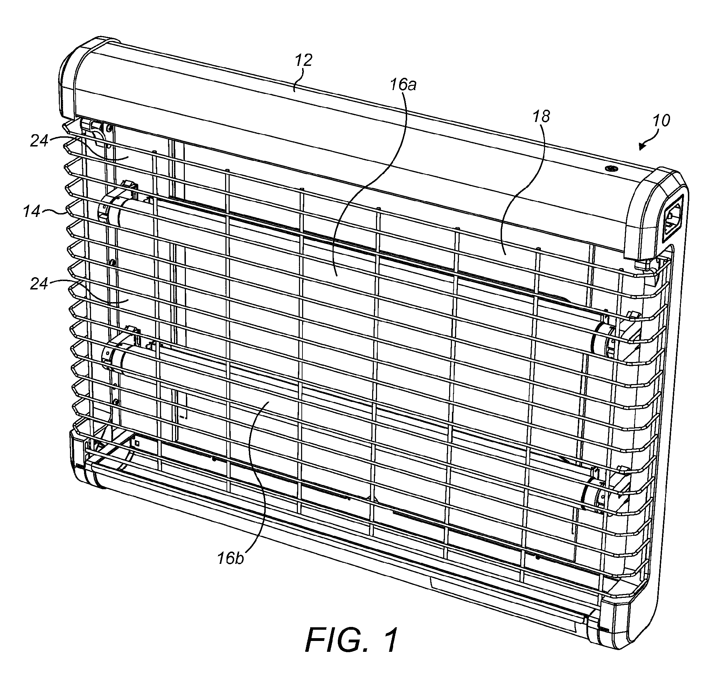

Figure 1 is a schematic front perspective view of an insect trap;
Figure 2 is a schematic perspective front view of the insect trap of figure 1 with a grille mechanism in an open position;

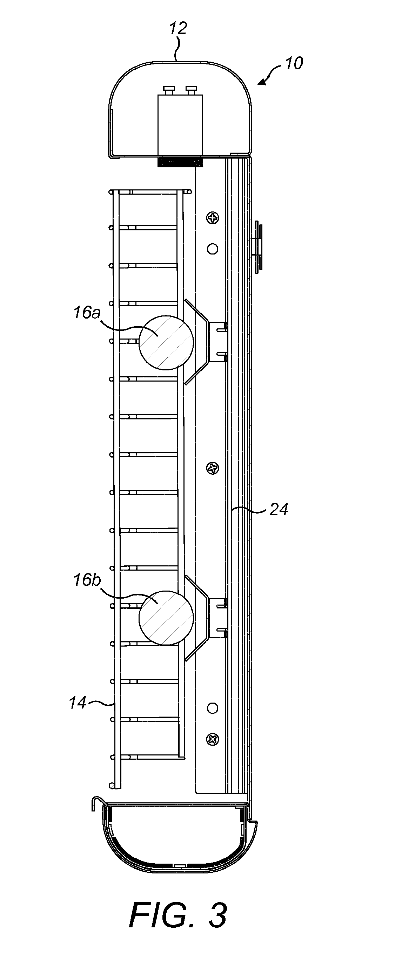

Figure 3 is a schematic cross sectional side view of the insect trap;

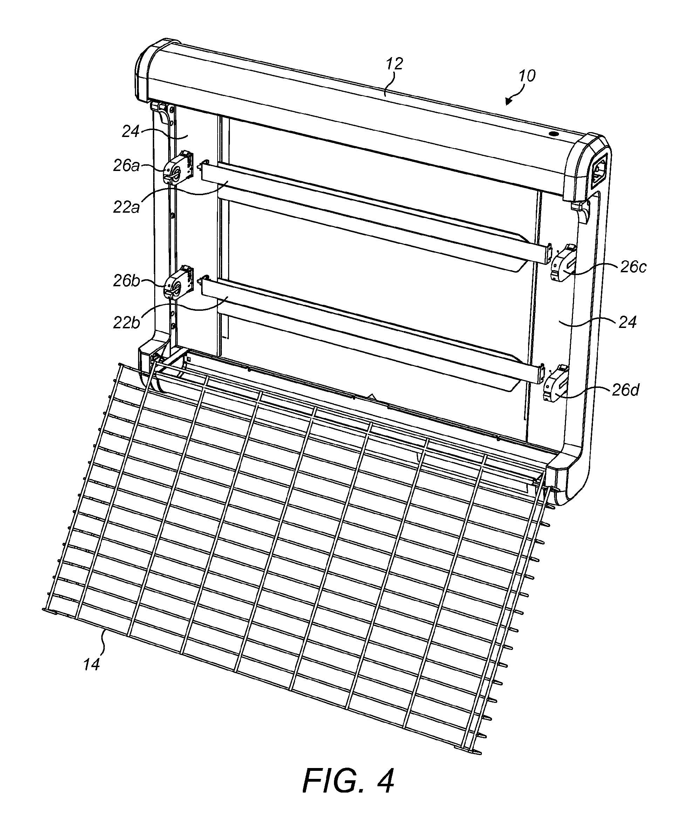

Figure 4 is a schematic perspective front view of the insect trap with the grille in an open position and lamps of the insect trap not in position, but showing the reflectors of the insect trap in position; and

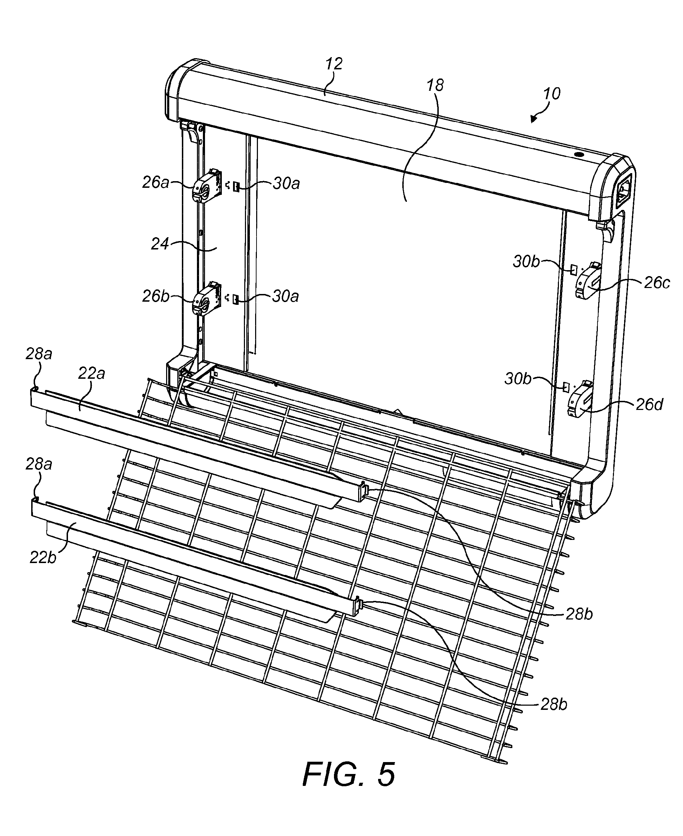

Figure 5 is a schematic front view similar to that of figure 4 but showing removable reflectors in an exploded view removed from a body of the insect trap.

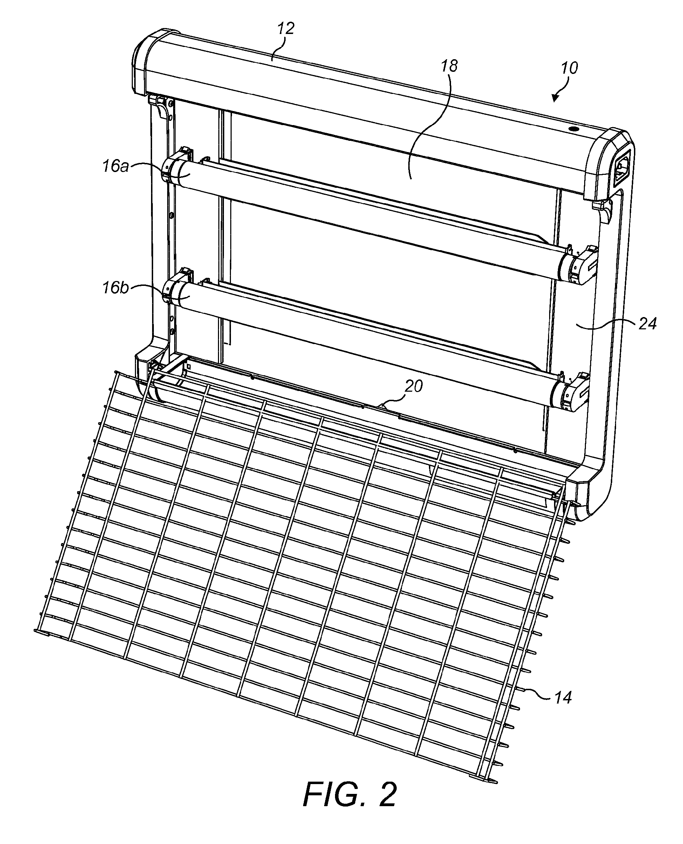

An insect trap 10 comprises a body portion 12, to which is secured a grille 14, by a hinged attachment to allow the grille 14 to open downwards (as shown in figure 2) to allow access to the body portion 12.

UV fluorescent tubes 16a and 16b are secured to the body portion 12 with standard fixings, which fixings also provide power to the fluorescent tubes 16a/b in the normal way.

Behind the UV fluorescent tube 16a/b and between ends thereof is an adhesive glueboard 18 that is removeably secured in position using a clip 20. The adhesive glueboard 18 can be removed for replacement when the glueboard loses effectiveness due to an accretion of insects or the UV fluorescent tubes 16a/b have caused curing of the adhesive to reduce effectiveness.

A key feature of the insect trap 10 is that it incorporates removable reflectors 22a and 22b located behind the UV fluorescent tube 16a/b. A body panel 24 of the body portion 12 comprises supports 26a-26d of usual construction for the UV fluorescent tubes 16a/b.

Tabs 28a and 28b of the reflectors 22a/b are received in corresponding openings 30a and 30b in the body panel 24.

The reflectors 22a and 22b may simply be removed by flexing the body of the reflector 22a/b to disengage the tabs 28a/b from the openings 30a/b. Similarly insertion of the reflectors 22a/b is achieved by flexing the reflector 22a/b and engaging the tabs 28a/b in the openings 30a/b.

The insect trap 10 is mains-powered and the UV fluorescent tubes 16a/b are illuminated in use to attract insects to the insect trap 10. An insect may pass through the grille 14 and approach the glueboard 18 and become immobilised thereon.

Periodically a user will replace the glueboard as it becomes covered in insects or the adhesive thereon is cured by the UV from the UV fluorescent tubes 16a/b.

If a user wishes to prolong the life of the glueboard 18, he will use the reflectors 22a/b, which are inserted by locating the tabs 28a/b in the corresponding slotted openings 30a/b in the body panel. The reflectors 22a/b are retained in position by tension in the reflectors 22a/b causing the tabs 28a/b to bear longitudinally outwards against the openings 30a/b.

If a user wishes to maximise the insect attracting and retaining function of the insect trap 10, then the reflectors 22a/b can be removed. Removal is effected by pinching the ends of the reflectors 22a/b towards each other to free the tabs 28a/b from the openings 30a/b and then pulling the reflectors outwards.

A distinct advantage of the insect trap 10 described herein is that it gives the user choice as to how the insect trap 10 is configured. If a user wishes to prolong the life of the adhesive glueboard 18 from the curing effects of the UV fluorescent 16a/b then the reflectors22a/b can be left in position. This is because the reflectors divert the UV light away from the adhesive glueboard 18 where the UV fluorescent tubes 16a/b are closet to the adhesive glueboard 18. This means that the adhesive glueboard 18 will need to be replaced less often, reducing service costs.

However, if the user wants to maximise the potential to catch insects more quickly then the user can remove the reflectors 22a/b, which opens up the most effective part of the glueboard 18, i.e. the part directly behind the UV fluorescent tubes 16a/16b, which is closest to the fluorescent tubes 16a/b. It is widely accepted in the industry that the majority of insects caught on the glueboard 18 are in the area of glue closest to the UV fluorescent tubes 16a/b.

In the way described above the user is given the option of whether to maximise the lifetime of the board or to maximise the potential of the insect trap 10 to catch insects. Thus, the utility of the insect trap 10 is increased significantly.

An alternative embodiment of insect trap replaces the glueboard with an electrified grille, in order to disable insects that make contact with the grille in the usual way.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An insect trap incorporating at least one insect-attracting light, at least one reflector and at least one insect-immobilising section, wherein the at least one reflector is removable and is operable to be refitted to the insect trap.

2. The insect trap of claim 1, wherein the insect trap is operable with the at least one reflector either in a position proximate the at least one insect-attracting light or with the at least one reflector removed.

3. The insect trap of any preceding claim, wherein the at least one reflector is securable to a body section of the insect trap.

4. The insect trap of claim 3, wherein the at least one reflector is securable by means of tabs.

5. The insect trap of any preceding claim, wherein supports of the at least one insect-attracting light provide power to the at least one insect-attracting light.

6. The insect trap of any preceding claim, comprising at least two insect-attracting lights each with an associated reflector.

7. The insect trap of any preceding claim, wherein the is interposed between the insect-attracting light and the at least one insect-immobilising section.

8. The insect trap of any preceding claim, wherein the at least one insect-immobilising section is a glueboard.

9. The insect trap of any preceding claim, wherein the at least one insect-immobilising section is removable after removal of the at least one reflector.

10. The insect trap of any one of claims 1 to 7, wherein the at least one insect-immobilising section is an electrified grille.

11. The insect trap of claim 10, wherein the electrified grille is pivotally attached to a body of the insect trap.
